Europäisches Patentamt

(19) European Patent Office (11) Numéro de publication : **0 151 357**

Office européen des brevets **B1**

(12) **FASCICULE DE BREVET EUROPÉEN**

(45) Date de publication du fascicule du brevet : (51) Int. Cl.⁴ : **B 23 H 1/04**, B 23 H 1/02
23.12.87

(21) Numéro de dépôt : **84402178.2**

(22) Date de dépôt : **30.10.84**

(54) Dispositif d'usinage par étincelage.

(30) Priorité : 04.11.83 FR 8317525

(43) Date de publication de la demande :
14.08.85 Bulletin 85/33

(45) Mention de la délivrance du brevet :
23.12.87 Bulletin 87/52

(84) Etats contractants désignés :
BE CH DE LI SE

(56) Documents cités :
FR-A- 1 261 579
FR-A- 1 291 955

(73) Titulaire : **FRAMATOME ET CIE.**
**Tour Fiat 1, Place de la Coupole**
**F-92400 Courbevoie (FR)**

(72) Inventeur : **Crespin, Gerard**
**1, rue Mozart**
**F-69100 Villeurbanne (FR)**

(74) Mandataire : **Bressand, Georges et al**
**c/o CABINET LAVOIX 2 Place d'Estienne d'Orves**
**F-75441 Paris Cedex 09 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne l'usinage de pièces métalliques par étincelage. Elle s'applique en particulier au perçage d'un trou débouchant dans une pièce métallique.

Les dispositifs classiques d'usinage par étincelage comportent une électrode pleine munie d'un vibreur, de fréquence fixe 50 Hertz, qui entraîne l'électrode dans son mouvement. Un signal électrique est envoyé dans l'électrode afin de provoquer une décharge électrique de faible durée entre l'électrode et la pièce métallique à usiner aux moments où l'électrode se trouve à une certaine distance de la pièce, créant ainsi un plasma et par là-même un enlèvement de matière.

Si ces dispositifs classiques d'usinage par étincelage donnent de façon générale des résultats satisfaisants, ils ne permettent pas, toutefois, de percer des trous de diamètre important avec de bons résultats.

En effet, dans ces dispositifs, les vibrations du vibreur sont engendrées par des moyens électromagnétiques qui utilisent comme source un signal électrique synchronisé avec le signal envoyé dans l'électrode pour provoquer la décharge électrique entre l'électrode et la pièce. Or, la décharge électrique n'a lieu que si la distance entre l'électrode et la pièce a une certaine valeur au moment où la tension et l'intensité du courant alimentant l'électrode atteignent leur valeur maximale. Comme les déplacements de l'électrode qui vibre sont fonctions de l'inertie de l'ensemble formé par l'électrode et son système de liaison au vibreur, lorsque cette inertie est trop importante, ce qui est le cas pour le perçage de trous de gros diamètre, la synchronisation entre les déplacements de l'électrode et la tension et l'intensité du courant de 50 Hz alimentant l'électrode est difficile ; le déclenchement de la décharge électrique et donc l'usinage de la pièce est par conséquent quasi impossible.

On pourrait remédier à cet inconvénient en diminuant la fréquence du courant alimentant l'électrode, mais on augmenterait ainsi le temps d'usinage.

On connaît par le FR-A-1 291 955 un appareil d'usinage électrolytique qui peut être équipé avec des électrodes de formes diverses et en particulier avec des électrodes de forme tubulaire pour le perçage d'une plaque.

On n'a cependant jamais utilisé d'électrodes tubulaires dans le cas du perçage par étincelage qui nécessite une électrode mise en vibrations dans une direction perpendiculaire à la surface de la pièce à percer.

Un autre inconvénient des dispositifs classiques d'usinage par étincelage réside dans le fait que l'électrode n'est guidée qu'à sa partie extrême, donc sur une faible longueur. Ce mauvais guidage donne à l'électrode un degré de liberté supplémentaire, perpendiculairement à la direction d'usinage : on enlève ainsi un volume de matière plus important, ce qui augmente le temps d'usinage ; en outre, le travail réalisé ne peut pas être précis.

La présente invention remédie aux inconvénients des dispositifs précités. Elle a pour but un dispositif d'usinage par étincelage permettant le perçage dans une pièce métallique d'un trou de diamètre important, avec une très bonne vitesse d'usinage, un excellent guidage de l'électrode et une grande précision.

Plus particulièrement, l'invention concerne un dispositif d'usinage par étincelage destiné au perçage dans une pièce métallique d'un trou cylindrique débouchant, comportant une électrode, un liquide diélectrique baignant les parties de l'électrode en contact avec la pièce, des moyens de guidage de l'électrode dans une direction normale à la pièce, des moyens pour provoquer une décharge électrique entre l'électrode et la pièce et des moyens pour faire vibrer axialement l'électrode.

Selon l'invention :

l'électrode est constituée par un tube cylindrique dont la forme et les dimensions extérieures correspondent au trou à percer ;

un fourreau est disposé à l'intérieur de l'électrode et relié à cette électrode par des moyens permettant un déplacement axial de faible amplitude de l'électrode par rapport au fourreau ;

les moyens de guidage sont constitués par un tube-support le long duquel l'électrode est susceptible de coulisser, le tube support étant placé contre la pièce métallique perpendiculairement à celle-ci au niveau du trou à percer par l'intermédiaire d'une embase, le tube support étant muni de moyens permettant de le maintenir dans cette position ;

et les moyens pour faire vibrer l'électrode sont constitués par des premiers moyens électromagnétiques fixés à l'intérieur de l'électrode et par des seconds moyens électromagnétiques fixés sur le fourreau, et coopérant avec les premiers moyens.

De préférence :

Le fourreau est muni de moyens de déplacement en translation longitudinale et de commande de ce déplacement.

Le tube support est mis en appui sur la pièce par l'intermédiaire d'une embase percée d'au moins un canal communiquant avec au moins un tube placé à l'intérieur du tube support et mis en dépression de façon à faire circuler le diélectrique, qui est amené en continu dans la zone de travail de l'électrode.

Une chambre est aménagée entre l'embase du tube support et la pièce et un tube placé à l'intérieur du tube support et mis en dépression communique avec la chambre de façon à maintenir contre l'embase la carotte formée dans la pièce métallique au cours du perçage.

Les moyens de maintien du tube support contre la plaque métallique sont constitués d'un portique solidaire du tube support, le portique étant fixé à la plaque au moyen de ventouses.

Afin que l'invention soit mieux comprise, celle-ci va être décrite de façon plus précise dans un mode de réalisation préféré décrit à titre d'exemple et représenté par les dessins annexés.

La figure 1 représente une coupe longitudinale d'un dispositif selon l'invention en cours d'usinage d'une pièce métallique sur laquelle il est fixé.

La figure 2 représente une coupe suivant AA de la figure 1.

Le dispositif selon l'invention est destiné à percer dans une pièce métallique 1 un trou débouchant dont l'emplacement est repéré par 2.

Le diamètre du trou à percer peut par exemple être voisin de 60 mm.

Un portique, constitué d'une plaque 3 supportée par au moins deux cylindres 4 fixés à la plaque métallique à percer 1 constitue le support du dispositif selon l'invention. Les cylindres 4 sont ajourés de façon à permettre leur décontamination, dans le cas où l'usinage à effectuer a lieu en milieu irradié. Les cylindres 4 sont fermés chacun par une pièce d'extrémité 5 constituant avec la plaque métallique 1 une chambre étanche 6 qui peut être mise en dépression par l'intermédiaire d'un tube 7 dont l'une des extrémités s'ouvre sur la chambre 6 et l'autre extrémité s'ouvre sur un canal 8 constituant une prise à vide. Les chambres 6 constituent alors des ventouses qui permettent au portique de se fixer sur la pièce métallique à usiner.

Le portique comporte en outre un tube 9 dont l'une des extrémités est soudée à la plaque 3 dans sa partie centrale et dont l'autre extrémité se termine par une embase 9' qui est plaquée contre la pièce métallique 1. Dans le mode représenté, puisque la pièce métallique 1 est plane, le tube 9 est bien sûr de même longueur que les cylindres 4 : il est ainsi maintenu dans une position fixe pendant tout l'usinage. Dans le cas où la pièce métallique aurait une surface plus complexe, les longueurs des cylindres 4 et du tube 9 pourraient bien sûr être différentes.

Le tube 9 constitue un tube-support le long duquel le dispositif d'usinage est susceptible de coulisser.

Le dispositif d'usinage est constitué d'une électrode 10 montée autour du tube-support 9 par l'intermédiaire d'un fourreau 11. L'électrode 10 comporte des ergots 12 correspondant à des cannelures 13 du fourreau 11 et est ainsi animée des mêmes mouvements de translation que le fourreau 11 lorsque celui-ci coulisse le long du tube-support 9. Il existe toutefois un léger jeu axial entre les ergots 12 et les cannelures 13 (de 5 à 10 mm par exemple), afin que l'électrode 10 ait la possibilité d'être animée de vibrations (de 5/10 mm par exemple). Dans ce but, le fourreau 11 comporte un logement pour une bobine 14 qui, mise sous tension, peut coopérer avec un aimant 15 de forme annulaire fixé à la paroi interne de l'électrode 10 pour provoquer des vibrations de l'électrode par rapport au fourreau 11 donc par rapport à la pièce à usiner 1, la fréquence de ces vibrations étant bien sûr fonction du courant d'alimentation de la bobine 14. Le fourreau 11 a ici été réalisé en deux pièces afin de faciliter le montage de la bobine 14 ; il est réalisé en un matériau isolant, par exemple en polyuréthane dur.

Le fourreau 11 est relié par l'intermédiaire de tiges de guidage 16 et d'une plaque de liaison 18 à un dispositif 17 de commande des déplacements en translation longitudinale de l'électrode 10 au fur et à mesure de l'usinage. Le dispositif 17, rendu solidaire de la plaque 3 du portique par des moyens non représentés, comporte un moteur pas à pas dont le fonctionnement est, de façon classique, asservi à la position de l'électrode 10. L'amplitude du déplacement longitudinal de l'électrode 10 est fonction de l'épaisseur de la pièce à usiner 1.

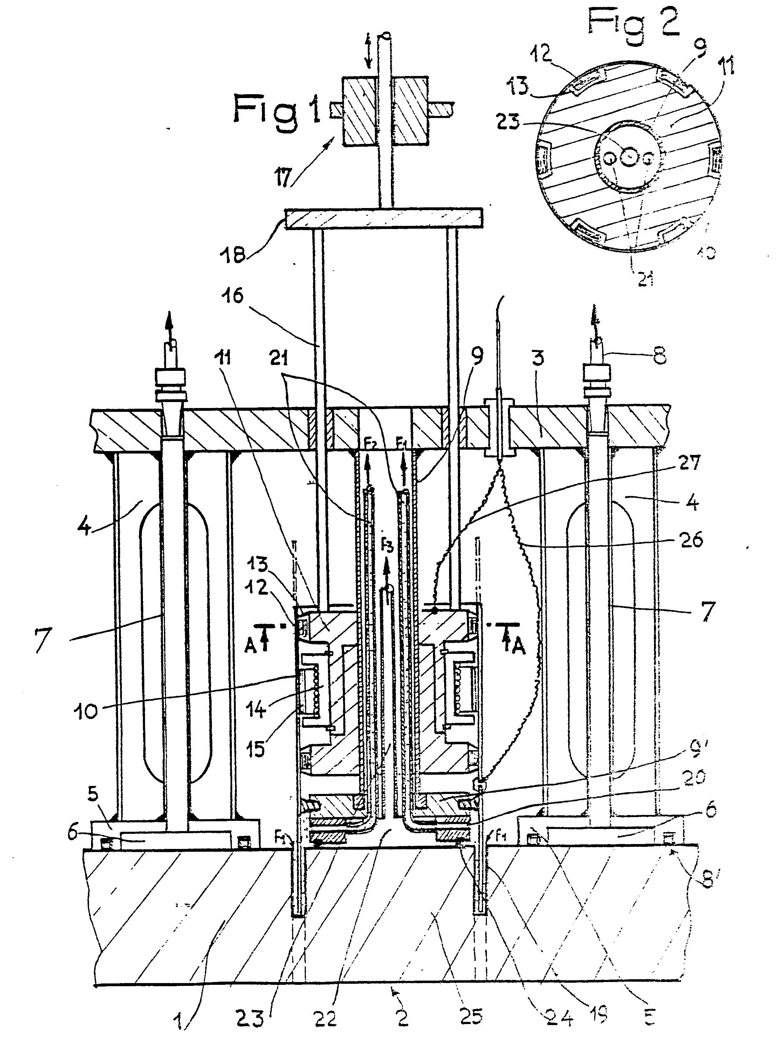

L'électrode 10 est réalisée en laiton mais elle peut, à son extrémité inférieure, qui effectue l'usinage proprement dit, être réalisée en un matériau conducteur plus résistant à l'usure tel que le matériau commercialisé sous la marque « SPARKAL ». Sur la figure 1, l'électrode 10 a été représentée en cours d'usinage ; c'est-à-dire qu'elle a déjà constitué dans la pièce métallique 1 un évidement annulaire 19. Pour que le dispositif fonctionne il faut bien sûr que cet évidement 19 soit constamment rempli de liquide diélectrique, par exemple de l'eau. Dans ce but, le liquide diélectrique est introduit le long de la paroi extérieure de l'électrode 10, dans l'évidement 19, comme ceci est indiqué par les flèches f1. Le liquide remonte ensuite le long de la paroi intérieure de l'électrode 10.

Au cours de l'usinage, le liquide diélectrique se charge de sphérules qui sont les débris d'usinage qu'il est nécessaire d'évacuer. Dans ce but, l'embase 9' est percée de canaux 20 communiquant chacun avec des tubes 21 placés à l'intérieur du tube-support 9. Au cours de l'usinage, ces tubes 21 sont mis en dépression de façon à évacuer le liquide diélectrique chargé de sphérules comme l'indiquent les flèches f2.

L'embase 9' comporte également une chambre 22 s'ouvrant sur la pièce métallique 1 d'une part et sur un tube 23 placé à l'intérieur du tube-support 9, et rendue étanche au moyen de joints 24. Au cours de l'usinage, des moyens d'aspiration non représentés, placés à l'extrémité du tube 23 opposée à la chambre 22 permettent la mise en dépression de la chambre 22, comme l'indique la flèche f3. Cette dépression permet de maintenir contre l'embase 9' la carotte 25 formée dans la pièce métallique au cours de l'usinage. La carotte 25 peut ainsi, à la fin de l'usinage, être retirée en même temps que le dispositif d'usinage.

Un câble 26 alimente l'électrode 10. Cette alimentation est du type fort ampérage, faible tension, de façon à provoquer une décharge électrique entre l'électrode 10 et la pièce 1. Un câble électrique 27 alimente la bobine 14 afin de faire vibrer l'électrode 10. Cette alimentation est du type faible tension, faible ampérage. Le signal électrique commun à l'alimentation de la bobine 14 et à l'alimentation de l'électrode 10 est à une fréquence de 50 Hertz ou multiple de 50 Hertz. Il est alternatif non redressé ou de préférence à double alternance redressée.

Le fonctionnement du dispositif selon l'invention est le suivant : on met en place le portique supportant le dispositif au moyen des ventouses 6. On approche l'électrode 10 de la pièce 1 au moyen du dispositif 17. On déclenche les vibrations de l'électrode et on alimente celle-ci afin de provoquer les décharges électriques. Le phénomène d'étincelage se produit, provoquant l'usinage de la pièce 1. Le dispositif 17 permet une avance de l'électrode au fur et à mesure de l'usinage. A la fin de celui-ci, le dispositif est retiré, ainsi que la carotte 25.

Le dispositif que l'on vient de décrire présente de nombreux avantages : il permet d'usiner la pièce 1 de façon rapide, car d'une part la quantié de matière à enlever est faible puisque l'électrode est tubulaire et guidée sur une grande longueur, et d'autre part la fréquence des décharges électriques peut être grande puisque l'inertie des pièces est ici faible (la seule pièce qui vibre est l'électrode et non pas un ensemble formé de l'électrode et de son système de liaison au vibreur) et pemet d'utiliser une fréquence élevée à double alternance redressée sans nuire à la bonne synchronisation entre les déplacements de l'électrode et la tension et l'intensité du courant alimentant l'électrode.

En outre le dispositif selon l'invention permet un usinage très précis dû au très bon guidage de l'électrode par l'intermédiaire du fourreau.

De plus, les déchets produits au cours de l'usinage sont en quantité limitée du fait que la quantité de matière enlevée est de faible volume ; cette faible quantité de débris est très bien éliminée par les tubes 21. La carotte qui subsiste après usinage est éliminée très facilement elle aussi grâce à la mise en dépression du tube 23.

On peut ajouter que le dispositif selon l'invention permet de percer des trous de gros diamètre sur site, à des endroits où il serait difficile de travailler avec des outils classiques tels que des forets. Le dispositif selon l'invention est en effet peu encombrant et peut travailler dans diverses positions et en particulier à l'horizontale. On peut ainsi utiliser le dispositif selon l'invention pour percer le bouclier thermique d'un réacteur nucléaire afin de pouvoir introduire des bouchons dans le cloisonnement du cœur. On peut alors utiliser comme diélectrique l'eau borée de la piscine du réacteur, l'eau chargée de sphérules évacuée par les tubes 21 étant recyclée au moyen d'un filtre avant d'être rejetée dans la piscine.

## Revendications

1. Dispositif d'usinage par étincelage pour le perçage, dans une pièce métallique (1), d'un trou cylindrique débouchant comportant une électrode (10), un liquide diélectrique destiné à baigner les parties de l'électrode (10) en contact avec la pièce (1), des moyens (9) de guidage de l'électrode dans une direction perpendiculaire à la pièce (1), des moyens (26) pour provoquer une décharge électrique entre l'électrode (10) et la pièce (1), et des moyens (14, 15) pour faire vibrer axialement l'électrode, caractérisé par le fait :

que l'électrode (10) est constituée par un tube cylindrique dont la forme et les dimensions extérieures correspondent au trou à percer ;

qu'un fourreau (11) est disposé à l'intérieur de l'électrode (10) et relié à cette électrode par des moyens (12, 13) permettant un déplacement axial de faible amplitude de l'électrode par rapport au fourreau ;

que les moyens de guidage sont constitués par un tube-support (9) le long duquel l'électrode (10) est susceptible de coulisser le tube support (9) étant placé contre la pièce métallique (1) perpendiculairement à celle-ci au niveau du trou à percer (2) par l'intermédiaire d'une embase (9'), le tube support étant muni de moyens (3, 4) permettant de le maintenir dans cette position ;

et que les moyens pour faire vibrer l'électrode sont constitués par des premiers moyens électromagnétiques (15) fixés à l'intérieur de l'électrode (10) et par des seconds moyens électromagnétiques (14) fixés sur le fourreau (11) et coopérant avec les premiers moyens (15).

2. Dispositif suivant la revendication 1, caractérisé par le fait que le fourreau (11) est muni de moyens (16, 17) de déplacement en translation axiale et de commande de ce déplacement.

3. Dispositif suivant l'une quelconque des revendications 1 et 2, caractérisé par le fait que le tube-support (9) est mis en appui sur la pièce (1), par l'intermédiaire de l'embase (9') percée d'au moins un canal (20) communiquant avec au moins un tube (21) placé à l'intérieur du tube-support (9) et mis en dépression de façon à évacuer le liquide diélectrique qui est amené en continu dans la zone de travail de l'électrode (10).

4. Dispositif selon la revendication 3, caractérisé par le fait qu'une chambre (22) est aménagée entre l'embase (9') du tube-support (9) et la pièce (1) et qu'un tube (23) placé à l'intérieur du tube-support (9) et mis en dépression communique avec la chambre (22) de façon à maintenir contre l'embase (9') une carotte (25) formée par l'électrode (10) dans la pièce (1) en cours de perçage.

5. Dispositif selon l'une quelconque des revendications 1 à 4, caractérisé par le fait que le tube-support (9) est fixé sur la pièce (1) par un portique (3, 4) solidaire du tube-support (9), le portique étant fixé sur la pièce (1), par l'intermédiaire de ventouses (5, 6).

## Claims

1. Device for machining by sparking intended for piercing through a metal workpiece an open cylindrical hole incorporating an electrode (10), a dielectric liquid in which it is intended to immerse the portions of the electrode (10) in contact with the workpiece (1), means (9) for guiding the electrode in a direction normal to the workpiece (1), means (26) for causing an electrical discharge between the electrode (10) and the workpiece (1) and means (14, 15) for causing the electrode to vibrate axially, characterized in that :

the electrode (10) is constituted by a cylindrical tube whose shape and external dimensions correspond to those of the hole (2) to be pierced ;

a sleeve (11) is arranged inside the electrode (10) and connected to that electrode by means (12, 13) allowing the electrode to be axially moved on a short distance in respect with the sleeve ;

the guiding means are constituted by a support tube (9) along which the electrode (10) is intended to slide, the support tube (9) being placed against the metal workpiece (1) perpendicular to this at the level of the hole (2) to be pierced through a foot (9'), the support tube having means (3, 4) for holding it in this position ;

and that the means for causing the electrode to vibrate are constituted by first electromagnetic means (15) fixed inside the electrode (10) and by second electromagnetic means (14) fixed on the sleeve (11) and cooperating with the first electromagnetic means.

2. Device according to claim 1, characterized in that the sleeve (11) is provided with means (16, 17) for displacement in longitudinal translation and for control of this displacement.

3. Device according to anyone of claims 1 and 2, characterized in that the support tube (9) is supported on the workpiece (1) through the foot (9') which is pierced with at least one passage (20) communicating with at least one tube (21) positioned inside the support tube (9) and maintained at a negative pressure so as to cause the dielectric liquid to circulate, continuously replenished along the outside wall of the electrode (10).

4. Device according to claim 3, characterized in that a chamber (22) is arranged between the foot (9') of the support tube (9) and the workpiece (1) and that a tube (23) positioned inside the support tube (9) and maintained at a negative pressure communicates with the chamber (22) so as to hold against the foot (9') a slug (25) formed in the metal workpiece (1) during the machining.

5. Device according to anyone of claims 1 to 4, characterized in that the support tube (9) is fixed on the workpiece (1) through a bridge (3, 4), the bridge being firmly fixed to the workpiece (1) by means of suction pads (5, 6).

**Patentansprüche**

1. Vorrichtung zum Bohren eines durchgehenden zylindrischen Lochs in einem metallischen Werkstück (1) mittels Funkenerosion mit einer Elektrode (10), einer dielektrischen Flüssigkeit, die dazu bestimmt ist, die mit dem Werkstück (1) in Kontakt stehenden Teile der Elektrode (10) zu umgeben, Führungen (9) der Elektrode in einer Richtung senkrecht zum Werkstück (1), Mitteln (26) zum Auslösen einer elektrischen Entladung zwischen der Elektrode (10) und dem Werkstück (1) und mit Organen (14, 15) zum axialen Vibrieren der Elektrode, dadurch gekennzeichnet, daß

die Elektrode (10) aus einem Zylinderrohr besteht, dessen Form und äußere Abmessungen dem zu bohrenden Loch entsprechen,

ein Futteral (11) im Inneren der Elektrode (10) angeordnet und mit dieser Elektrode über Mittel (12, 13) verbunden ist, die eine axiale Verschiebung mit geringem Hub der Elektrode gegenüber dem Futteral erlauben,

dadurch, daß die Führungsorgane aus einem Rohrträger (9) bestehen, entlang dessen die Elektrode (10) gleiten kann, wobei der Rohrträger (9) gegenüber dem Metallwerkstück (1) und senkrecht zu diesem auf der Höhe des zu bohrenden Loches mittels eines Sockels (9) angeordnet ist, wobei der Rohrträger mit Organen (3, 4) versehen ist, die es ermöglichen, ihn in dieser Position zu halten,

und dadurch, daß die Mittel zum Vibrieren der Elektrode aus einem ersten elektromagnetischen Organ (15) bestehen, das im Inneren der Elektrode (10) befestigt ist und durch zweite elektromagnetische Mittel (14), die an dem Futteral (11) befestigt sind und mit den ersten Mitteln (15) zusammenwirken.

2. Vorrichtung nach Anspruch 1, dadurch gekennzeichnet, daß das Futteral (11) mit Mitteln (16, 17) zu dessen translatorischer axialer Verschiebung und zur Steuerung dieser Verschiebung vorgesehen ist.

3. Vorrichtung nach einem der Ansprüche 1 und 2, dadurch gekennzeichnet, daß der Rohrträger (9) über den Sockel (9') auf dem Werkstück (1) zur Auflage gebracht wird, wobei der Sockel mit mindestens einem Kanal (20) durchbohrt ist, der mit mindestens einem Rohr (21) in Verbindung steht, das im Inneren des Rohrträgers (9) angeordnet ist und daß der Rohrträger mit Unterdruck beaufschlagt wird, derart, daß er die dielektrische Flüssigkeit absaugt, die kontinuierlich in die Arbeitszone der Elektrode (10) eingeführt wird.

4. Vorrichtung nach Anspruch 3, dadurch gekennzeichnet, daß einer Kammer (22) zwischen dem Sockel (9') des Rohrträgers (9) und dem Werkstück (1) ausgebildet ist und dadurch, daß ein Rohr (23), das im Inneren des Rohrträgers (9) angeordnet und mit Unterdruck beaufschlagt ist, mit der Kammer (22) in Verbindung steht, um einen Rohrkern (25), der durch die Elektrode (10) in dem Werkstück während des Bohrens geformt wird, gegen den Sockel (9') zu halten.

5. Vorrichtung nach einem der Ansprüche 1-4, dadurch gekennzeichnet, daß der Rohrträger (9) auf dem Werkstück (1) mittels eines Trägergerüstes (3, 4) gehaltert wird, das mit dem Rohrträger (9) starr verbunden ist, wobei das Trägergerüst auf dem Werkstück (1) mittels Saugnäpfen (5, 6) befestigt ist.

Fig 1

Fig 2